Europäisches Patentamt

European Patent Office

Office européen des brevets

(11) Publication number: **0 099 864**
**B1**

# (12) EUROPEAN PATENT SPECIFICATION

(45) Date of publication of patent specification: **08.07.87**

(21) Application number: **83850111.2**

(22) Date of filing: **28.04.83**

(51) Int. Cl.⁴: **E 01 C 7/22,** E 01 C 7/26 //
C08L95/00

(54) **Method of high-temperature mixing and then shock-cooling bituminous road surfacing materials.**

(30) Priority: **29.04.82 SE 8202693**

(43) Date of publication of application:
**01.02.84 Bulletin 84/05**

(45) Publication of the grant of the patent:
**08.07.87 Bulletin 87/28**

(84) Designated Contracting States:
**AT BE CH DE FR GB IT LI LU NL**

(56) References cited:
FR-A-2 117 156
GB-A- 346 025
US-A-3 249 452

(73) Proprietor: **Statens Väg- och Trafikinstitut VTI
S-581 01 Linköping (SE)**

(72) Inventor: **Rosengren, Ake
Vintervägen 6
S-183 62 Täby (SE)**
Inventor: **Widen, Olle
Rönnhagsvägen 9
S-582 70 Linköping (SE)**
Inventor: **Wagberg, Lars-Göran
Rönnhagsvägen 8
S-582 70 Linköping (SE)**

(74) Representative: **Onn, Thorsten et al
AB Stockholms Patentbyra Zacco & Bruhn P.O.
Box 3129
S-103 62 Stockholm (SE)**

Courier Press, Leamington Spa, England.

**0 099 864**

**Description**

At the making of a bituminous road surface, the bituminous material must meet different requirements in respect of the temperature in the different phases of work — from the manufacture of the material in the asphalt works to the compacting of the material laid out on the road.

In certain types of road surfacing it can be difficult to meet the requirements by the use of known art.

A typical such case applies to draining asphalt concrete, which has received its name because it readily allows water to pass therethrough and prevents water from accumulating on the road. The prerequisite for this is a high content of communicating voids. This is brought about in that the asphalt concrete is composed of so much coarse and so little fine stone material fractions that the cavities between the coarse stone grains only to a small degree are filled with fine stone grains. The coarse stone grains form in this way in principle a coherent stone framework with bitumen as binding agent. The finest stone material can be imagined to be absorbed substantially entirely by the binding agent and thereby increases the thickness of the binding agent on the coarse stone grains.

One condition for a satisfactory service life of an asphalt concrete is a sufficient amount of binding agent. This has proved to be a difficult requirement for draining asphalt concrete. The capillary forces are insufficient to retain the binding agent in the loose material with very coarse voids, and at the normal temperatures at the manufacture of the asphalt concrete the binding agent runs off from the coarse stones and takes along fine stone material and accumulates on the bottom of material supplies and loaded carts. This problem certainly can be eliminated by manufacturing the material at temperatures substantially lower than normal. The binding agent thereby becomes so viscous, that its running-off is of no practical importance, unless the binding agent content is unnecessarily high. The lower temperature, however, enforces a longer mixing time and thereby reduces the capacity of the asphalt works. In spite of the longer mixing time, there still is risk of insufficient mixing. A lower mixing temperature is disadvantageous also in other respects. It can be difficult to maintain the temperature within the narrow limits set by the risks of running-off and insufficient mixing, due to the varying water content of the stone material fed into the rotary drier of the asphalt works, and the asphalt works often operate with a varying production of different types of material, and in normal asphalt works the mixing temperature cannot be lowered or raised rapidly so as to be adapted to a special type of material.

According to known art, the manufacture was carried out at a temperature so low that the running-off was not unacceptably high and/or fibres and other materials were added in order to stop the running-off.

The present invention has the object to eliminate the aforesaid problems by a simple and economic method.

This object is achieved by the features indicated in claim 1. The dried stone material and the binding agent are first mixed at a temperature so high that the binding agent assumes a viscosity so low that it readily is distributed over all stone material and wets the same. The mixing temperature, more precisely, should be higher than the temperature corresponding to the viscosity $5 \times 10^{-4}$ m$^2$s$^{-1}$ (500 cSt) of the binding agent. Thereafter, a suitable amount of water is added while the material is continued to be stirred or stirred again. The water is thereby evaporated, and the material is rapidly cooled. The binding agent thereby assumes a viscosity so high that the running-off of binding agent at the subsequent handling of the material does not constitute a practical problem. The process, thus, presupposes that the material immediately after the water treatment assumes a temperature exceeding the boiling point of the water.

When using the right technique, the evaporation of the water proceeds so rapidly that the water does not act negatively on the adherence between stone surface and binding agent. The high temperature of the stone material at the mixing with the binding agent promotes the adherence. In spite thereof, when the stone material is acid it can be necessary to add adhesion agent, in order to prevent the binding agent in the completed coat lateron from being pushed aside by water, and the surfacing from being destroyed prematurely. When water is being added, troublesome foam formation can occur, which, however, can be damped by anti-foaming agents to such a degree that it does not imply an inconvenience. As anti-foaming agents in this connection silicones have proved suitable, added either to the binding agent or to the water.

At a special embodiment according to the invention, a small amount of hydrated lime is used in the water. The lime reacts with the naphtenic acids in the asphalt bitumen, and the naphtenates formed act as adherence agents. At an insufficient content of naphtenic acids, the binding agent can be mixed with a small amount of fatty or resin acids, for example tall oil. Lime has been used since a long time ago for improving the adherence, but then it was added in large quantities and generally to the stone material prior to the addition of the binding agent. This has given rise to problems with unhealthy dust formation at the process and the handling of the large quantities of lime, and also rendered the process expensive. As an alternative to lime adherence agents of amine type were used which, however, are toxic and can be hazardous from a working environment aspect.

Draining asphalt concrete is a kind of open asphalt concrete. Its contrast is sealed asphalt concrete. In reality, there exist all variants between open and sealed asphalt concrete with more or less pronounced problems of running. In a hot climate there also exists the problem of the material, of which type it may be, to cool sufficiently rapidly so that it can be rolled. A temperature shock treatment according to the invention can imply rationalization of the work. The same applies to an alternating production of compounds with different requirements on the manufacturing temperature.

2

**0 099 864**

The shocking effect according to the invention is interesting also at all kinds of bituminous surfacings where heat-sensitive additives are used to improve the properties of the surfacing. Examples of such additives are rubber and polymers, which at a high temperature are broken down. The breaking-down speed increases substantially with the temperature. After the shock treatment, therefore, the break-down proceeds much slower, and there remains a sufficient amount in the surfacing for obtaining the desired effect by the agent.

Example

A series of mixing experiments have been carried out in the laboratory with and without silicone as foam-quenching agent and with and without adherence agents. As regards silicone, the alternatives 0,001 per cent by weight in the binding agent (quality for admixing in oil) and 0,02 per cent by weight in the water (quality for admixing in water) have been tested. As regards adherence agent, the alternatives 0,4 per cent by weight adherence agent of amine type in the binding agent and 1,6 per cent by weight slack lime in the water have been tested. The water amount in all cases was 1 per cent calculated on the weight of the compound. As regards stone material and binding agent, the composition was maintained constant throughout the entire series.

The stone material substantially consisted of crushed granite and had the grain size distribution as follows:

| 8—12 mm | 54,4% |
|---|---|
| 4—8 mm | 25,7% |
| 0,074—4 mm | 16,6% |
| —0,074 mm | 3,3% |

The binding agent consisted of asphalt bitumen with the penetration of about 80 and the acid value of about 2,5 mg KOH/g. The binding agent content in the completed compound was 5,2 per cent by weight.

The stone material as well as the binding agent had the temperature of 150°C when the mixing was commenced. After 30 seconds mixing in a counter-current mixer water was sprayed on the compound while the mixing continued. The spraying lasted 15 seconds.

In the compounds thus manufactured the adherence was studied according to the rolling flask method, at which 120 g compound was rolled in 100 g distilled water for 24 hours, while studying the stripping of the binding agent from the stones. The result is listed in the table.

Results
1 = no stripping
4 = substantial stripping

| | Without silicone | Silicone in bitumen | Silicone in water |
|---|---|---|---|
| Without adherence agent | 4 | 4 | 4 |
| With amine in the bitumen | 1 | 1 | 1 |
| With lime in the water | 4 | 3 | 2 |

A corresponding compound without adherence agent and without silicone manufactured at 120°C without water shocking yielded at the same test the note 4, i.e. substantial stripping.

At one experiment a thermos bottle heated to 120°C was filled with compound immediately after the addition of all water. The temperature was followed by a thermistor inserted into the compound. After 10 minutes the temperature was 113°C. Thereafter no appreciable increase in temperature occurred. After 5 hours the temperature was 110°C.

In all cases no running of binding agent in the compound was observed.

**Claims**

1. A method of manufacturing bituminous material for road surfacing, especially of draining type, in the form of a hot mixture of dried stone material and binding agent, characterized in that subsequent to the mixing of the dried stone material and binding agent at a temperature exceeding the temperature corresponding to the viscosity $5 \times 10^{-4}$ $m^2s^{-1}$ (500 cSt) of the binding agent, water is added to the compound at the same time as the compound is stirred in order to rapidly reduce the temperature of the compound, substantially by evaporation of the water, but not below 100°C.

2. A method as defined in claim 1, characterized in that foam damping agent is added to the binding agent or water.

3

**0 099 864**

3. A method as defined in claim 1 or 2, characterized in that adherence agent is used.

4. A method as defined in claim 1 or 2, characterized in that hydrated lime is added to the water for improving the adherence in the road surfacing.

5. A method as defined in claims 1—4, characterized in that rubber, polymer or other heat-sensitive material is admixed to the binding agent or compound prior to the water addition.

**Patentansprüche**

1. Verfahren zur Herstellung von bituminösem Strassendeckenmaterial, insbesondere vom drainierenden Type, in der Form eines heissen Gemisches von getrocknetem Steinmaterial und Bindemittel, dadurch gekennzeichnet, dass nach Mischung des getrockneten Steinmaterials und des Bindemittels bei einer Temperatur, die die der Viskosität $5 \times 10^{-4}\,\mathrm{m^2s^{-1}}$ (500 cSt) des Bindemittels entsprechende Temperatur überschreitet, Wasser dem Gemische zugesetzt wird, während das Gemisch umgerührt wird, um die Temperatur des Gemisches wesentlich durch Verdampfung des Wassers, nicht aber unter 100°C, schnell zu reduzieren.

2. Verfahren nach Anspruch 1, dadurch gekennzeichnet, dass Schaumdämpfungsmittel dem Bindemittel oder dem Wasser zugesetzt wird.

3. Verfahren nach Anspruch 1 oder 2, dadurch gekennzeichnet, dass Haftmittel verwendet wird.

4. Verfahren nach Anspruch 1 oder 2, dadurch gekennzeichnet, dass gelöschter Kalk dem Wasser zugesetzt wird, um die Adhäsion im Strassenbelage zu verbessern.

5. Verfahren nach den Ansprüchen 1—4, dadurch gekennzeichnet, dass Gummi, Polymer oder anderes wärmeempfindliches Material dem Bindemittel oder dem Gemische vor dem Wasserzusatz zugesetzt wird.

**Revendications**

1. Procédé de fabrication de matériaux de revêtement routier bitumineux, en particulier du type perméable à l'eau, sous la forme d'un mélange chaud de pierres concassées séchées et d'un liant, caractérisé en ce que, après le mélange des pierres concassées séchées et du liant, effectué à une température supérieure à celle correspondant à une viscosité de $5 \times 10^{-4}\,\mathrm{m^2s^{-1}}$ (500 cSt) du liant, on ajoute de l'eau à la composition, tout en agitant celle-ci afin de réduire rapidement sa température, principalement par évaporation de l'eau, sans que cette température descende en dessous de 100°C.

2. Procédé selon la revendication 1, caractérisé en ce qu'un agent antimousse est ajouté au liant ou à l'eau.

3. Procédé selon l'une des revendications 1 et 2, caractérisé en ce qu'un agent d'adhérence est utilisé.

4. Procédé selon l'une des revendications 1 et 2, caractérisé en ce que l'on ajoute de la chaux hydratée à l'eau afin d'améliorer l'adhérence du revêtement routier.

5. Procédé selon une quelconque des revendications 1 à 4, caractérisé en ce que l'on mélange du caoutchouc, des polymères ou une autre matière thermosensible avec le liant ou la composition avant d'y ajouter l'eau.

4